# EUROPÄISCHE PATENTSCHRIFT

(11) **EP 1 301 372 B1**
(45) Veröffentlichungstag und Bekanntmachung des Hinweises auf die Patenterteilung: **11.01.2006**
(21) Anmeldenummer: 01967184.1
(22) Anmeldetag: 16.07.2001
(51) Int. Cl.: B60Q 1/48

(54) **PARKHINWEISSCHILD FÜR BEHINDERTENKRAFTFAHRZEUGE**
PARKING INDICATION SIGN FOR VEHICLES FOR DISABLED PERSONS
PANNEAU DE SIGNALISATION DE STATIONNEMENT POUR VEHICULES AUTOMOBILES DE PERSONNES HANDICAPEES

(30) Priorität: 19.07.2000 DE 10035053
(43) Veröffentlichungstag der Anmeldung: 16.04.2003
(73) Patentinhaber: Moser-Born, Lara Alexandra, 82441 Ohlstadt (DE); Moser, Josef, 81929 München (DE)
(72) Erfinder: Moser, Georg, 80804 München (DE)
(74) Vertreter: Schütz, Peter
(86) Internationale Anmeldenummer: PCT/EP2001/008198
(87) Internationale Veröffentlichungsnummer: WO 2002/006084

(56) Entgegenhaltungen:
- WO-A-91/05682
- DE-A- 19 537 619
- US-A- 4 897 630
- PATENT ABSTRACTS OF JAPAN vol. 1999, no. 13, 30. November 1999 (1999-11-30) & JP 11 227539 A (KIMURA SHUNJI), 24. August 1999 (1999-08-24)

## Beschreibung

Die Erfindung betrifft eine Hinweisvorrichtung für ein von Behinderten benutztes Kraftfahrzeug mit den im Oberbegriff des Anspruchs 1 angegebenen Merkmalen.

Zum Schutz gegen zu nahes Parken an der Einstiegstüre von Behindertenfahrzeugen gibt es die gängigen Rollstuhlfahrerplaketten. Die Plakette ist zwar bei Tageslicht sichtbar, wird jedoch oftmals, da nicht auffällig genug, schon häufig übersehen, bei Dunkelheit ist sie jedoch kaum mehr zu bemerken. Das Problem beruht also überwiegend auf der fehlenden Wahrnehmung und dadurch wird es Rollstuhlfahrern häufig unmöglich, selbstständig in ihr Fahrzeug zu gelangen.

Aus den deutschen Gebrauchsmustern DE 296 15 687 U1 und DE 297 20 654 U1 sowie der französischen Offenlegungsschrift Nr. 2 690 885 ist es hierzu bekannt, auf die Seitenscheibe einen seitlich wegragenden Arm mit einem Hinweisschild aufzustecken und beim Schließen der Scheibe festzuklemmen. Dieser Arm ragt so weit vom Fahrzeug weg, wie die Tür geöffnet werden muß, damit der Behinderte in sein Fahrzeug einsteigen kann. Ferner ist es aus der DE 197 25 209 A1 bekannt, an der Windschutzscheibe ein Parkscheibendisplay vorzusehen, das beim Absperren des Fahrzeugs automatisch die Parkbeginnzeit anzeigt. In der Anzeigefläche kann dabei automatisch ein Hinweis wie ein Behindertenemblem erscheinen. Aus US-A-4 897 630 ist eine Warneinrichtung bekannt, die den Raum um ein Fahrzeug auf Einhaltung eines Hindestabstands überwacht and bei Unterschneitung dieses Abstandes ein Warn signal abgibt. Schließlich ist es aus der DE 195 37 619 C2 bekannt, rückwärtige Abstandssensoren an einem Kraftfahrzeug vorzusehen, welche die Annäherung beispielsweise eines Fahrrades von hinten erfassen und automatisch eine Warnung gegen ein Öffnen der Türen veranlassen oder dies sogar blockieren.

Der Erfindung liegt die Aufgabe zugrunde, eine automatisch arbeitende Hinweisvorrichtung für einen hinreichenden Parkabstand zu schaffen, welche nicht die Anbringung irgendwelcher vom Fahrzeug wegragender Teile erfordert.

Diese Aufgabe wird durch die im Anspruch 1 angegebenen Merkmale gelöst. Weiterbildungen der Erfindung sind in den Unteransprüchen gekennzeichnet.

Die erfindungsgemäße, am Fahrzeug des Behinderten angebrachte Vorrichtung erfaßt mittels Sensoren, wie Ultraschall- oder Bewegungssensoren, ein zu nahe parkendes Fahrzeug und setzt durch Verbindung zur Beleuchtung des Hinweisschildes und zum Akustiksignalgenerator beides für einen eingestellten Zeitraum in Gang.

Eine beim Einparken einsetzende Beleuchtung ist nachts sehr auffällig. Der Signalton dient vor allen Dingen zur Unterstützung bei Tageslicht, da er beim Verlassen des Fahrzeugs vom Parkenden über die Kürze der Distanz gut hörbar ist.

Bei einem speziellen Ausführungsbeispiel der Erfindung werden zwei von Einparkhilfen her bekannte Ultraschallsensoren in einem gegenseitigen Abstand von 70 cm an der Einstiegstür des Behindertenfahrzeugs angebracht. Sie werden so eingestellt, daß dann, wenn ein Fahrzeug in einem geringeren Abstand als eine Türbreite neben dem Fahrzeug des Behinderten parkt, ein Signal über ein Kabel zu dem an der Seitenscheibe im Fahrzeuginneren angebrachten Hinweisschild gelangt. Mit einer Zeiteinstellung kann das Schild beispielsweise eine Minute lang leuchten oder blinken, und dieser Hinweis läßt sich unterstützen durch einen von außen wahrnehmbaren Gongton, der durch einen im Schild oder auch am (im) Fahrzeug angebrachten Lautsprecher übertragen wird.

Bei der bevorzugten Ausführungsform mit zwei beabstandeten Sensoren lassen sich überflüssige Signalauslösungen durch vorübergehende Passanten verhindern, da die Signale durch gegenseitige Kopplung der Sensoren nur bei gemeinsamem Ansprechen das Signal auslösen.

## Patentansprüche

1. Hinweisvorrichtung für ein von Behinderten, insbesondere Rollstuhlfahrern, benutztes Kraftfahrzeug, mit einem Leuchtschild oder einer Leuchttafel, die einen Hinweis enthält, beim Parken von Fahrzeugen auf einen ausreichenden Abstand zur Einstiegstür des Kraftfahrzeugs zu achten, **dadurch gekennzeichnet, daß** mindestens ein Abstandssensor oder Bewegungsmelder derart am Kraftfahrzeug angebracht ist, daß zu nahe parkende Fahrzeuge durch eine Abstandsmessung erfaßt werden und daraufhin eine Beleuchtung des Hinweisschildes und ein akustischer Signalgeber für eine vorbestimmte Zeitspanne aktiviert werden.

2. Vorrichtung nach Anspruch 1, **dadurch gekennzeichnet, daß** zur Abstandsmessung zwei gekoppelte Ultraschallsensoren oder Bewegungsmelder im gegenseitigen Abstand an der Einstiegstür des Kraftfahrzeugs angebracht sind.

3. Vorrichtung nach Anspruch 1 oder 2, **dadurch gekennzeichnet, daß** der akustische Signalgeber als Lautsprecher ausgebildet ist.

## Claims

1. An indication device for a motor vehicle used by a disabled person, in particular a person in a wheelchair, with said indication device comprising an illuminated sign or an illuminated board which displays information that for parking of vehicles sufficient space should be maintained to the entry door of the motor vehicle, **characterised in that** at least one distance sensor or movement detector is fitted to the motor vehicle, such that vehicles which are parking too near are registered by distance measuring, and subsequently, illumination of the sign and an acoustic signal transmitter are activated for a specified period of time.

2. The device according to claim 1, **characterised in that** for distance measuring, two coupled ultrasound sensors or movement detectors are affixed, mutually spaced apart, to the entry door of the motor vehicle.

3. The device according to claim 1 or 2, **characterised in that** the acoustic signal transmitter is a loudspeaker.

## Revendications

1. Dispositif indicateur pour véhicule automobile utilisé par des handicapés, notamment des conducteurs de fauteuil roulant, comportant une plaquette lumineuse ou un tableau synoptique lumineux, qui indique, lorsque ledit conducteur gare le véhicule, qu'il existe une distance suffisante par rapport à la portière d'accès du véhicule, **caractérisé en ce qu'**au moins un capteur de distance ou un détecteur de mouvement est aménagé sur le véhicule automobile de telle sorte qu'une mesure de la distance détecte les véhicules qui se garent trop près et cela active sur ce un éclairage de la plaquette indicatrice et un émetteur de signal acoustique pendant un laps de temps prédéfini.

2. Dispositif selon la revendication 1, **caractérisé en ce que**, pour mesurer la distance, deux capteurs à ultrasons ou détecteurs de mouvement couplés sont aménagés à distance mutuelle sur la portière d'accès du véhicule automobile.

3. Dispositif selon la revendication 1 ou 2, **caractérisé en ce que** l'émetteur de signal acoustique est conçu comme un haut-parleur.
